# EUROPEAN PATENT APPLICATION

(11) **EP 2 690 476 A1**
(43) Date of publication of application: **29.01.2014**
(21) Application number: 12761516.9
(22) Date of filing: 19.03.2012
(51) Int. Cl.: G02B 7/02

(54) **LENS DEVICE**

(30) Priority: 24.03.2011 JP 2011065329
(71) Applicant: FUJIFILM Corporation, Tokyo 106-8620 (JP)
(72) Inventor: HARADA, Shinichiro, Saitama-shi, Saitama 331-9624 (JP); SAITOU, Katsumi, Saitama-shi, Saitama 331-9624 (JP); KANBE, Takao, Saitama-shi, Saitama 331-9624 (JP); ONO, Shinobu, Saitama-shi, Saitama 331-9624 (JP)
(74) Representative: Klunker . Schmitt-Nilson . Hirsch
(86) International application number: PCT/JP2012/057011
(87) International publication number: WO 2012/128248

(57) **Abstract**

To prevent a shaft pad member from dropping even when a lens apparatus is in an individual state without using a special member.

Guide shafts (25, 26) are secured to a lens housing (10). Lens holders (16, 18) are supported on those movably. Rear ends (44, 45) of the guide shafts (25, 26) are inserted in first support holes (34, 35). Front ends (41, 42) are press-fitted in second support holes (319. A shaft pad member (50) is fitted in the first support holes (34, 35) to position the rear ends (44, 45) in the first support holes (34, 35). A sensor holder (73) where an imaging device (70) is fixed is overlapped on the shaft pad member (50). The sensor holder (73) is fixed on a rear plate, and the shaft pad member (50) is prevented from dropping out of the first support holes (34, 35) by the sensor holder (73).

## Description

### TECHNICAL FIELD

The present invention relates to a lens apparatus in which a lens holder is movable along plural guide shafts.

### BACKGROUND ART

A lens apparatus is attached to a camera body in an optical instrument, for example, a camera such as a surveillance camera, broadcast camera and the like. In the lens apparatus having functions of focus adjustment and zooming, movable lenses such as a focus lens, zooming lens and the like are disposed movably in an optical axis direction. A known example of moving mechanism for a movable lens includes a lens holder for holding the movable lens, and two guide shafts extending in an optical axis direction for supporting the lens holder movably. The lens holder has a guide portion with an axial hole, and an anti-rotation portion of a fork shape, and is received on respectively the guide shafts in a slidable manner. The guide portion has a greater length than the anti-rotation portion in order to prevent offsetting. The guide portion is received on the discrete guide shafts to enable two adjacent lens holders to come near.

Patent document 1 discloses the lens apparatus in which a lens housing of a box shape is used and two guide shafts are secured to the lens housing. The lens housing has front and rear plates extending perpendicularly to the optical axis. Two quadrilateral holes of a small size are formed in the front plate. Two quadrilateral holes of a large size are formed in the rear plate. Front ends of the two guide shafts are inserted through the quadrilateral holes of the rear plate, and press-fitted in the quadrilateral holes of the front plates. A pad member is fitted in the quadrilateral holes of the rear plate, and presses the rear end of the guide shafts to two side lines of the quadrilateral holes to position the guide shafts.

### PRIOR ART DOCUMENTS

### Patent Documents

Patent Document 1: Japanese Patent Laid-open Publication No. 2010-066713

### SUMMARY OF INVENTION

### Problems to Be Solved by The Invention

The pad member for positioning the guide shafts is inserted in a rear side of an engagement portion of the lens housing by resiliently deforming an engagement projection of an upper end of the pad member. As the pad member is not firmly secured to the lens housing, it is likely that the pad member may drop from the lens housing during transport of the lens apparatus in an individual state before assembly in the camera body.

An object of the present invention is to provide a lens apparatus in which a pad member is kept from dropping from a lens housing without using a special fixing member.

### Means for Solving the Problems

In order to achieve the above object in the present invention, there are provided a plurality of lens holders for holding lenses, a plurality of guide shafts, a lens housing having front and rear plates, a plurality of first support holes formed in the rear plate, a plurality of second support holes formed in the front plate, a plurality of shaft pad members secured to the first support holes, and an imaging device retaining member. The plurality of guide shafts are disposed in parallel with a direction of an optical axis of the lenses, for supporting the lens holders movably. The plurality of first support holes have a larger size than the guide shafts. The plurality of second support holes are for receiving press-fit of a front end of the guide shafts inserted through the first support holes. The plurality of shaft pad members are inserted in respectively the first support holes, for contacting a rear end surface of the guide shafts, and pushing an outer surface of the guide shafts perpendicularly to the optical axis. The imaging device retaining member retains an imaging device for imaging of an image formed by a plurality of the lenses, the imaging device retaining member being fixed on the rear plate in a state overlapped on the shaft pad members.

Preferably, the shaft pad members have a body and a projection formed to project from the body, the body partially contacts a rear end surface of the guide shafts, the projection partially pushes an outer surface of the guide shafts perpendicularly to the optical axis. Preferably, the first support holes have a channel portion for fitting in of an edge of the body and a quadrilateral through hole for receiving insertion of the projection.

Preferably, the projection is in an A-shape, and a link portion thereof presses a portion of an outer surface of the guide shafts, and presses a remaining portion of the outer surface of the guide shafts to two side lines of the quadrilateral through hole. Preferably, the body of the shaft pad member becomes flush with the rear plate when an edge of the body is engaged with the channel portion of the first support holes.

Preferably, the shaft pad members are formed from resilient plastic material. Preferably, the body has a pad portion formed by bending partially in a U shape, and becomes deformed to absorb surplus force of push when the pad portion is pressed by the imaging device retaining member. Plural circular bosses are formed with the pad portion for receiving the imaging device retaining member.

Preferably, the imaging device retaining member is an aluminum plate to which the imaging device is secured. Preferably, the imaging device retaining member is a circuit board with which the imaging device is connected.

### Effect of the Invention

According to the present invention, the rear of the shaft pad member is pushed by the imaging device retaining member secured to the lens housing. Thus, the shaft pad member is kept from dropping during transport of the lens apparatus. Also, no special part is necessary for preventing drop of the shaft pad member, so that the structure can be simple and the cost can be low.

### BRIEF DESCRIPTION OF DRAWINGS

[Fig. 1] Fig. 1 is a section illustrating construction of a lens apparatus according to the present invention;
[Fig. 2] Fig. 2 is a perspective view illustrating a body of a lens housing;
[Fig. 3] Fig. 3 is a rear elevation illustrating a shaft pad member;
[Fig. 4] Fig. 4 is a perspective view illustrating the shaft pad member as viewed from the rear;
[Fig. 5] Fig. 5 is a perspective view illustrating the shaft pad member as viewed from the front;
[Fig. 6] Fig. 6 is an explanatory view illustrating a fixed state of guide shafts with the shaft pad member as viewed from the rear plate;
[Fig. 7] Fig. 7 is a section illustrating construction of a lens apparatus of a second embodiment;
[Fig. 8] Fig. 8 is a section illustrating construction of a lens apparatus of a third embodiment;
[Fig. 9] Fig. 9 is a perspective view illustrating the shaft pad member used in the third embodiment.

### MODE FOR CARRYING OUT THE INVENTION

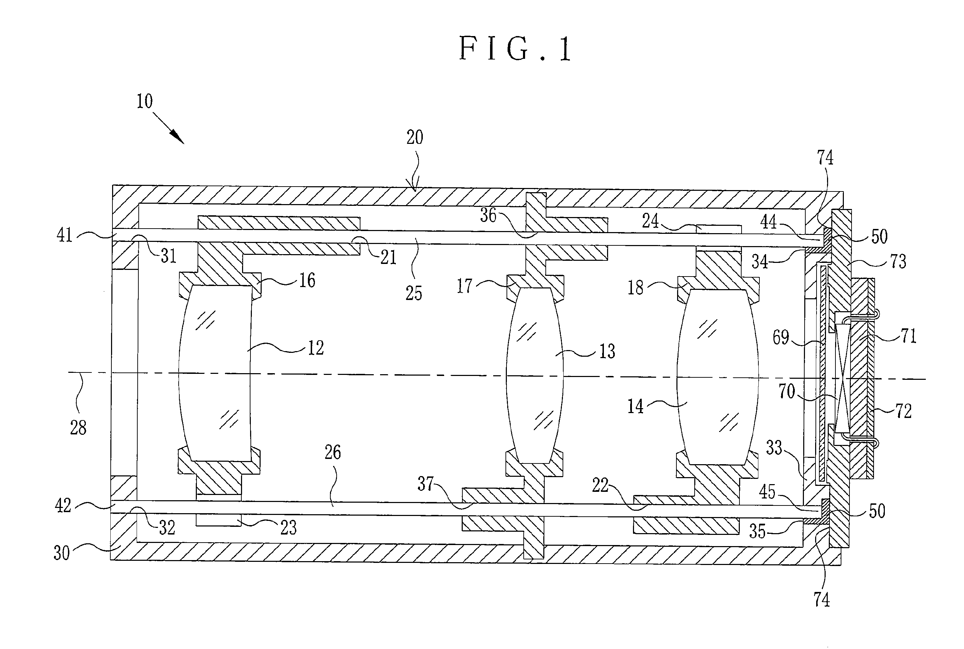

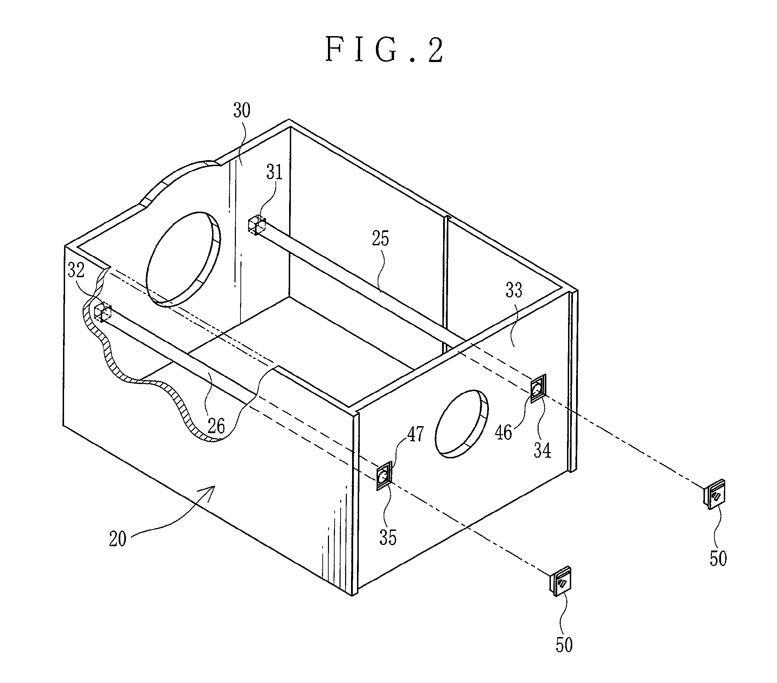

In Figs. 1 and 2, a lens apparatus 10 is used for a surveillance camera, and includes first, second and third lens groups 12, 13 and 14 (hereinafter referred to as lenses) or three constituting a focusing optical system. The first to third lenses, although depicted as single lens elements in the drawings, are actually constituted by a plurality of lens elements. The first lens 12 is a variator lens for changing a focal length. The third lens 14 is a focus lens for focus adjustment. The first and third lenses move along an optical axis 28. The second lens 13 is a relay lens fixed in an immovable manner. At the time of zooming, the first lens 12 moves to change an image magnification. At the time of focus adjustment, the third lens 14 moves. Note that the first lens 12 and the third lens 4 move for the zooming.

The first to third lenses 12-14 are mounted in lens holders 16, 17 and 18. A lens housing 20 contains the lens holders 16-18. The lens holder 17 is fixed in the lens housing 20. Two guide shafts 25 and 26 parallel with the optical axis 28 are secured to the lens housing 20. In the lens holders 16 and 18 are formed guide holes 21 and 22 with a predetermined ensured length, and guide grooves 23 and 24 for anti-rotation purpose. The guide holes 21 and 22 and the guide grooves 23 and 24 for anti-rotation purpose are engaged with the guide shafts 25 and 26 in a movable manner in an optical axis direction.

Although omitted from the drawings, lens holder moving mechanisms are disposed for respectively the lens holders 16 and 18. Each of the lens holder moving mechanisms includes a stepping motor and a feed screw rotated by the stepping motor. Each feed screw is engaged helically with a nut formed on the lens holders 16 and 18. Upon instructing zooming or focus adjustment, the stepping motor rotates. The lens holders 16 and 18 move along the guide shafts 25 and 26 according to the combination of the feed screw and the nut. Note that the lens holders 16 and 18 may be moved by a known cam mechanism.

The guide shaft 25 is penetrated through a first support hole 34, a hole 36 and the guide hole 21 serially, the first support hole 34 being formed in a rear plate 33 of the lens housing 20, the hole 36 being formed in the lens holder 17, the guide hole 21 being formed in the lens holder 16. After this, a front end 41 of the guide shaft 25 is press-fitted in a second support hole 31 formed in a front plate 30. Before securing the guide shaft 26, the guide groove 24 formed in the lens holder 18 is engaged with the guide shaft 25. Then the guide shaft 26 is penetrated through a first support hole 34, the guide hole 22, a hole 37 and the guide groove 23 serially, the first support hole 34 being formed in the rear plate 33, the guide hole 22 being formed in the lens holder 18, the hole 37 being formed in the lens holder 17, the guide groove 23 being formed in the lens holder 16. After this, a front end 42 of the guide shaft 26 is press-fitted in a second support hole 32 formed in the front plate 30.

The guide shafts 25 and 26 include the front ends 41 and 42 and rear ends 44 and 45. Reference numerals 46 and 47 denote end surfaces (rear end surfaces) of the rear ends 44 and 45. When the front ends 41 and 42 of the guide shafts 25 and 26 are press-fitted in the second support holes 31 and 32 of the front plate 30, the end surfaces 46 and 37 are positioned in the first support holes 34 and 35 formed in the rear plate 33. A shaft pad member 50 is fitted in a clearance space between the rear ends 44 and 45 and the first support holes 34 and 35. Note that it is preferable slightly to reduce a size of the shaft pad member for pressing in the first support holes 34 and 35 for the purpose of temporarily securing the shaft pad member 50 to the rear plate 33.

For the purpose of preventing the front ends 41 and 42 from dropping out of the second support holes 31 and 32 by ensuring the press-fit of the front ends 41 and 42 of the guide shafts 25 and 26, a length of each side line of the second support holes 31 and 33 is set smaller than a diameter of the guide shafts 25 and 26. An area of this reduction is formed by a small thickness for a resiliently deformable portion. The front ends 41 and 42 of the guide shafts 25 and 26 are pressed by repulsive force created by deformation of the resiliently deformable portion with the guide shafts 25 and 26, and thus are reliably fixed on the front plate 30.

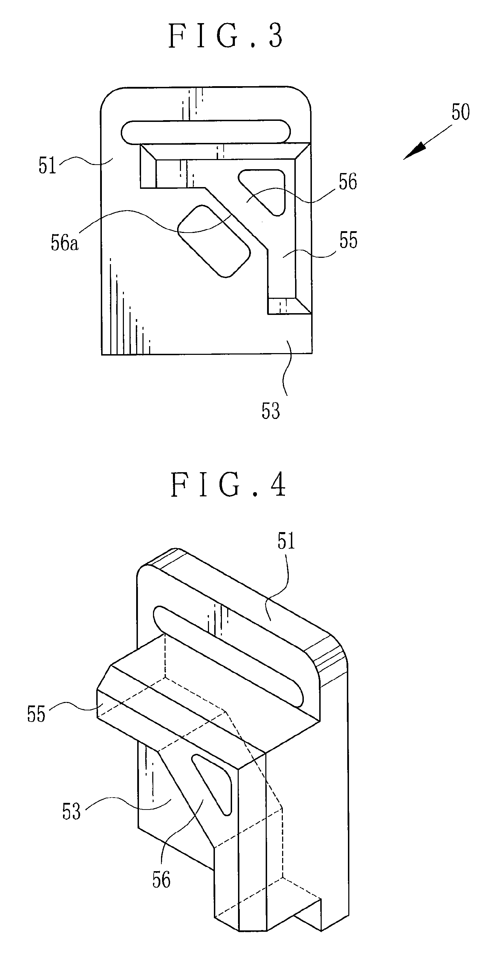

As illustrated in Figs. 3-5, the shaft pad member 50 includes a body 51 of a plate shape which has a front surface 52 and a rear surface 53, and includes an A-shaped projection 55 formed on the rear surface 53. The projection 55 is inserted in the first support holes 34 and 35 of the rear plate 33. In this state, the rear surface 53 partially contacts the end surfaces 46 and 47 of the guide shafts 25 and 26. In the projection 55, a link portion 65 extends diagonally for linking the "inverted V" in the A-shape. One surface of the link portion 65 is a pressure surface 56 for pressing an outer surface of the rear ends 44 and 45 of the guide shafts 25 and 26.

The shaft pad member 50 is formed from a plastic material with resiliency. For example, urethane, nylon, polyacetal and the like are preferable with suitable rigidity and suitable resiliency. Note that the lens housing 20 is formed from aluminum or hard plastic material. The guide shafts 25 and 26 are formed from metal.

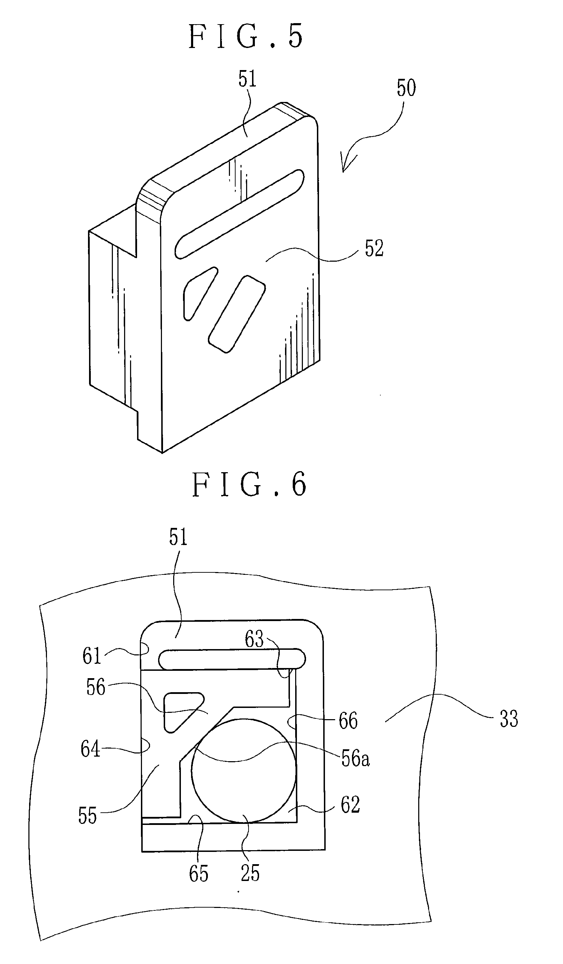

As illustrated in Fig. 6, the first support hole 34 includes a channel portion 61 and a quadrilateral through hole 62. The channel portion 61 is engaged with an edge of the body 51 of the shaft pad member 50. In the through hole 62 is inserted the projection 55. When the edge of the body 51 stands engaged with the channel portion 61, the front surface 52 of the shaft pad member 50 is flush with the rear plate 33. Among side lines 63-66 defining the quadrilateral of the through hole 62, the projection 55 is press-fitted in a clearance space between the two side lines 63 and 64 and the guide shaft 25. Thus, an outer surface of the guide shaft 25 is pressed on the two adjacent side lines 65 and 66 by the pressure surface 56 of the projection 55, and positioned in a predetermined position. A peripheral edge of the projection 55 is chamfered to facilitate insertion in the clearance space. Note that this is the situation also with the first support hole 35 and the shaft pad member 50 for engagement therewith.

After the guide shafts 25 and 26 are fixed on the lens housing 20 by the shaft pad member 50, an infrared cut filter 69 and an imaging device 70 are disposed as illustrated in Fig. 1. The infrared cut filter 69 is driven by an infrared cut filter loading/unloading device (not shown) secured to the lens housing 20.

The imaging device 70 is fixed on an aluminum plate 71. A circuit board 72 is fixed on a rear surface of the aluminum plate. The imaging device 70 is attached to the circuit board 72 by soldering. The aluminum plate 71 is fixed on a sensor holder 73 (imaging device retaining member). The sensor holder 73 is in a plate shape, overlapped on the rear plate 33 of the lens housing body 20, and fastened together with screws. A drop preventing surface 74 is positioned on the sensor holder 73 to cover the shaft pad member 50, and contacts the front surface 52 of the shaft pad member 50. This prevents the shaft pad member 50 from dropping out of the first support holes 34 and 35 and coming away from the rear plate 33 when the lens apparatus 10 is transported individually before the lens apparatus 10 is secured to the body of the surveillance camera.

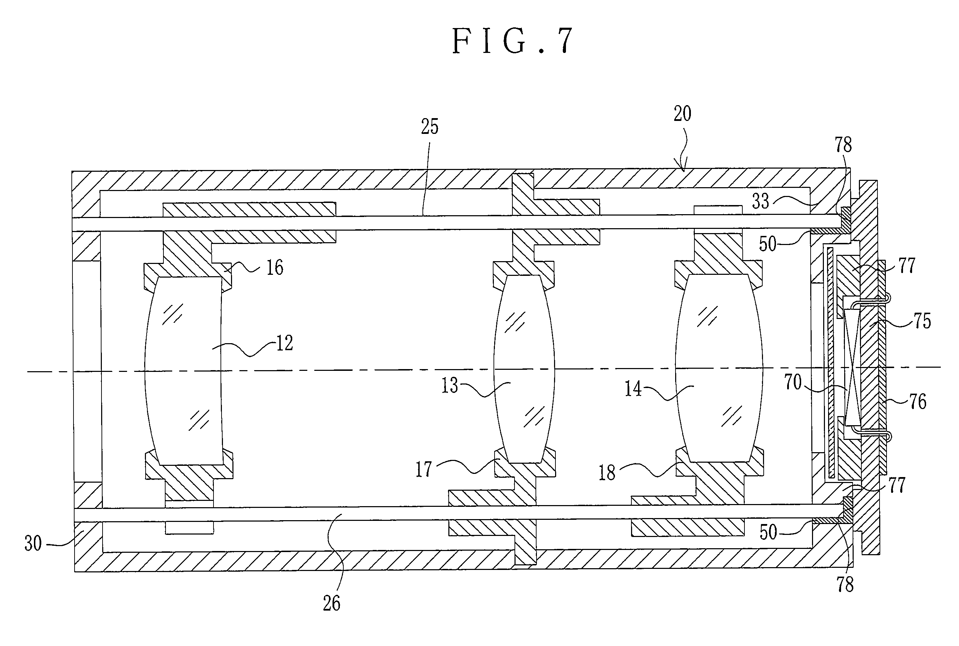

In Fig. 7, a second embodiment of a lens apparatus is illustrated. A circuit board 76 is fixed on an aluminum plate 75 (imaging device retaining member). The imaging device 70 is fixed on the aluminum plate 75 and also connected with the circuit board 76. Also, a sensor cover 77 for covering the imaging device 70 is fixed on the aluminum plate 75. The aluminum plate 75 is attached to the rear plate 33 of the lens housing 20 by screws (not shown). A drop preventing surface 78 is positioned on the aluminum plate 75 to cover the shaft pad member 50. The drop preventing surface 78 contacts the front surface 52 of the body 55 of the shaft pad member 50 to prevent drop from the first support holes 34 and 35.

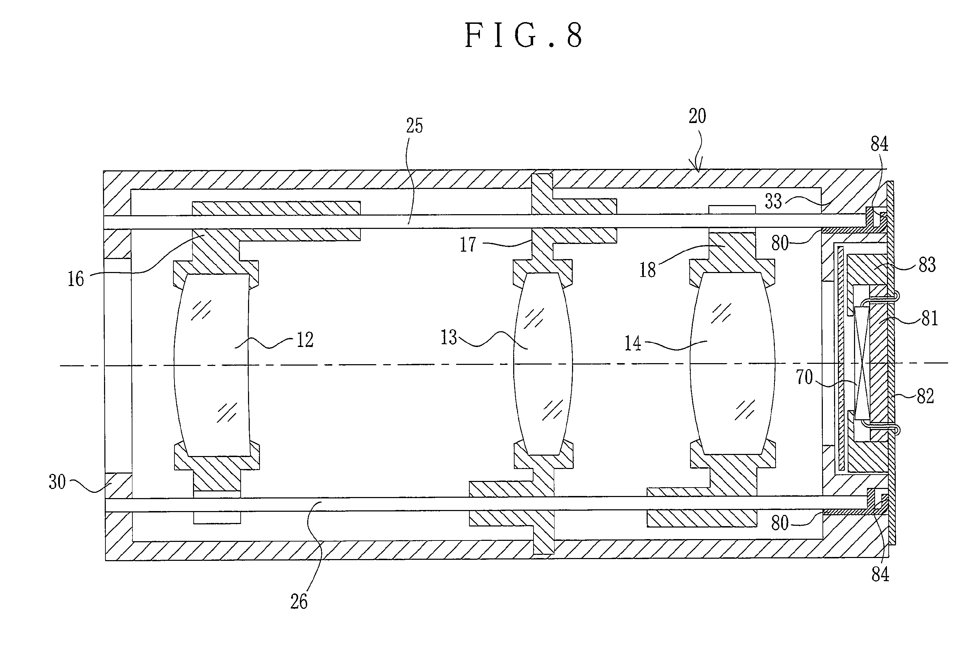

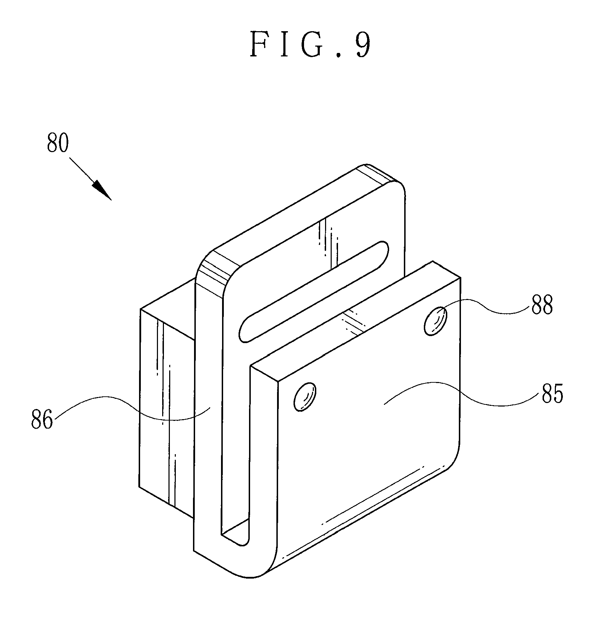

In Figs. 8 and 9, a third embodiment of a lens apparatus is illustrated. The imaging device 70 is fixed on an aluminum plate 81. The aluminum plate 81 is fixed on a circuit board 82 (imaging device retaining member). A sensor cover 83 for covering the imaging device 70 is fixed on the circuit board 82. The circuit board 82 is attached to the rear plate 33 of the lens housing 20 by screws (not shown). A drop preventing surface 84 is positioned on the circuit board 82 to cover a shaft pad member 80, and contacts a pad portion 85 of the shaft pad member 80 to prevent the shaft pad member 80 from dropping out of the first support holes 34 and 35. Note that the shaft pad member 50 described above may be used in place of the shaft pad member 80. It is possible in the first and second embodiments to use the shaft pad member 80 in turn.

In Fig. 9, the shaft pad member 80 has the pad portion 85 for contacting the drop preventing surface 84. The pad portion 85 is a plate portion (extension) formed by bending back one end of a body 86 in a U shape, and pressed by the drop preventing surface 84. A plurality of circular bosses 88 with a small spherical surface are formed on a flat surface of the pad portion 85, and contact the drop preventing surface 84. The pad portion 85 is resiliently deformed at a curved portion in a U shape when pushed by the drop preventing surface 84, absorbs surplus force of push from the drop preventing surface 84, and prevents unwanted force from exertion to the circuit board 82 and the guide shafts 25 and 26.

Although the front and rear plates are formed together with the housing body in the above-described lens housing, the front and rear plates may be attached to the housing body. Also, the lens apparatus of the present invention can be used for a broadcast camera, recording camera for recording vehicle accidents, and the like in addition to the surveillance camera described above.

### DESCRIPTION OF THE REFERENCE NUMERALS

- 10: lens apparatus
- 12, 13, 14: lenses
- 16, 17, 18: lens holders
- 20: lens housing
- 25, 26: guide shafts
- 31, 32: second support holes
- 34, 35: first support holes
- 50, 80: shaft pad member
- 51: body
- 55: projection
- 56: link portion
- 63-65: four side lines
- 70: imaging device
- 71, 81: aluminum plate
- 72, 76: circuit board
- 73: sensor holder
- 75: aluminum plate
- 82: circuit board
- 85: pad portion

## Claims

1. A lens apparatus comprising:
a plurality of lens holders for holding lenses;
a plurality of guide shafts, disposed in parallel with a direction of an optical axis of said lenses, for supporting said lens holders movably;
a lens housing having front and rear plates;
a plurality of first support holes, formed in said rear plate, for receiving insertion of respectively said guide shafts;
a plurality of second support holes, formed in said front plate, for receiving press-fit of a front end of said guide shafts inserted through said first support holes;
a plurality of shaft pad members, inserted in respectively said first support holes, for contacting a rear end surface of said guide shafts, and pushing an outer surface of said guide shafts perpendicularly to said optical axis;
an imaging device retaining member for retaining an imaging device for imaging of an image formed by a plurality of said lenses, said imaging device retaining member being fixed on said rear plate in a state overlapped on said shaft pad members.

2. A lens apparatus as defined in claim 1, wherein said shaft pad members have a body and a projection formed to project from said body, said body partially contacts a rear end surface of said guide shafts, said projection partially pushes an outer surface of said guide shafts perpendicularly to said optical axis;
said first support holes have a channel portion for fitting in of an edge of said body and a quadrilateral through hole for receiving insertion of said projection.

3. A lens apparatus as defined in claim 2, wherein said projection is in an A-shape, and a link portion thereof presses a portion of an outer surface of said guide shafts, and presses a remaining portion of said outer surface of said guide shafts to two side lines of said quadrilateral through hole.

4. A lens apparatus as defined in claim 3, wherein said body becomes flush with said rear plate when an edge of said body is engaged with said channel portion of said first support holes.

5. A lens apparatus as defined in claim 2, wherein said shaft pad members are formed from resilient plastic material.

6. A lens apparatus as defined in claim 5, wherein said body has a pad portion formed by bending partially in a U shape, and becomes deformed to absorb surplus force of push when said pad portion is pressed by said imaging device retaining member.

7. A lens apparatus as defined in claim 6, wherein plural circular bosses are formed with said pad portion for receiving said imaging device retaining member.

8. A lens apparatus as defined in claim 2, wherein said imaging device retaining member is an aluminum plate to which said imaging device is secured.

9. A lens apparatus as defined in claim 2, wherein said imaging device retaining member is a circuit board with which said imaging device is connected.
